Europäisches Patentamt

**European Patent Office**

Office européen des brevets

(11) Veröffentlichungsnummer: **0 062 288**
**B1**

(12) **EUROPÄISCHE PATENTSCHRIFT**

(45) Veröffentlichungstag der Patentschrift:
**06.02.85**

(21) Anmeldenummer: **82102683.8**

(22) Anmeldetag: **30.03.82**

(51) Int. Cl.⁴: **G 01 V 9/04**, G 08 B 13/18,
F 16 P 3/14

(54) **Direkt an ein Wechselspannungsnetz anschliessbare Wechsellichtschranke.**

(30) Priorität: **03.04.81 DE 3113547**

(43) Veröffentlichungstag der Anmeldung:
**13.10.82 Patentblatt 82/41**

(45) Bekanntmachung des Hinweises auf die Patenterteilung:
**06.02.85 Patentblatt 85/6**

(84) Benannte Vertragsstaaten:
**CH FR IT LI**

(56) Entgegenhaltungen:
**DE - A - 2 532 063**
**DE - A - 2 710 631**
**FR - A - 2 277 387**
**US - A - 4 087 799**
**US - A - 4 160 246**

**Prospekt der Fa. Erwin Sick GmbH, Optik-Elektronik, Reflexions-Lichtschranken, Fr 2 (1976)**

(73) Patentinhaber: **Erwin Sick GmbH Optik-Elektronik, Sebastian-Kneipp-Strasse 1, D-7808 Waldkirch (DE)**

(72) Erfinder: **Erdmann, Jürgen, Eisenbahnstrasse 35, D-7808 Waldkirch 3 (DE)**
Erfinder: **Kuhn, Fritz, Schwarzwaldstrasse 78, D-7808 Waldkirch 3 (DE)**

(74) Vertreter: **Dipl.-Phys.Dr. Manitz Dipl.-Ing. Finsterwald Dipl.-Ing. Grämkow Dipl.-Chem.Dr. Heyn Dipl.-Phys.Rotermund, B.Sc. Morgan Robert-Koch-Strasse 1, D-8000 München 22 (DE)**

## Beschreibung

Die Erfindung betrifft eine an ein Wechselspannungsnetz anschliessbare Wechsellichtschranke mit einem Photoempfänger und einer über eine Gleichrichterdiode und einen PUT an die Netzspannung angeschlossenen Sende-Photodiode, wobei parallel zu dem PUT und der Photodiode ein Speicherkondensator geschaltet ist, der im Rhythmus der Netzspannung über die Photodiode entladen wird. PUT ist die Abkürzung für einen programmierbaren Unijunctions-Transistor. Im Gegensatz zu dem in der Wirkungsweise ähnlichen Thyristor, der schaltet, wenn die Steuerelektrode positiver als die Kathode wird, schaltet der PUT, wenn die Steuerelektrode negativer als die Anode wird.

Derartige Wechsellichtschranken sind an sich bekannt [Prospekt der Fa. Erwin Sick GmbH Optik-Elektronik, Reflexions-Lichtschranken FR 2 (1976)]. Das Ziel der vorliegenden Erfindung besteht nun darin, den schaltungstechnischen Aufwand für derartige Wechsellichtschranken möglichst geringzuhalten. Ausserdem sollen hohe Einschaltströme bei entsprechenden Lasten unterdrückt werden. Der für die Entstörung erforderliche Aufwand soll ausserdem so weit wie möglich herabsetzbar sein.

Die erfindungsgemässe Lösung dieser Aufgabe ist in Anspruch 1 definiert.

Dadurch wird also eine Impulslichtquelle netzsynchron jeweils beim Nulldurchgang der Netzwechselspannung aktiviert. Dies führt bei nicht durch ein Hindernis unterbrochenem Lichtweg zwischen Lichtsender und Lichtempfänger zum zwangsläufigen Einschalten des Schaltausgangs während des Nulldurchgangs der Netzwechselspannung.

Zu bemerken ist, dass die Erfindung für solche Lichtschranken gedacht ist, bei denen Lichtsender und Lichtempfänger in einem gemeinsamen Gehäuse angeordnet sind. Am Ende des Überwachungsbereichs einer solche Lichtschranke befindet sich ein Retroreflektor, der das vom Lichtsender ausgestrahlte Lichtbündel in sich zum im gleichen Gehäuse befindlichen Lichtempfänger zurückreflektiert.

Die erfindungsgemässe Wechsellichtschranke hat den Vorteil, dass hohe Einschaltströme bei entsprechenden Lasten unterdrückt werden. Weiter werden Störspannungen unterdrückt, da im Einschaltmoment nur sehr kleine Betriebsspannungen zu verarbeiten sind, was zu einer geringen Spannungssteilheit d U/dt führt. Hieraus resultiert ein relativ geringer Aufwand für die Entstörung der erfindungsgemässen Schaltungsanordnung.

Um auf einfache Weise eine positive Betriebsspannung für die in der erfindungsgemässen Wechsellichtschranke vorhandenen Schaltungselemente zu schaffen, ist nach einer bevorzugten Ausführungsform zwischen Masse und die Parallelschaltung von Kondensator und Zenerdiode über eine in gleicher Richtung wie die erste Gleichrichterdiode geschaltete zweite Gleichrichterdiode ein erster Glättungskondensator geschaltet. Eine entsprechende negative Betriebsgleichspannung für die Schaltelemente kann dadurch erzeugt werden, dass zwischen Masse und die Parallelschaltung von Kondensator und Zenerdiode über eine in entgegengesetzter Richtung wie die erste Gleichrichterdiode geschaltete dritte Gleichrichterdiode ein zweiter Glättungskondensator geschaltet ist.

Da das Empfangssignal der erfindungsgemässen Wechsellichtschranke lediglich aus Impulsen besteht, die bei freiem Lichtweg z.B. im zeitlichen Abstand von 20 ms auftreten, ist zur Erzeugung eines stationären Ausgangssignals ein Speicherelement vorgesehen, welches zweckmässig dadurch realisiert wird, dass die Photoempfangsanordnung eine bistabile Kippstufe aufweist, welche beim Auslösen eines Lichtblitzes an der Photodiode rückgesetzt und nach Erscheinen eines geringfügig verzögert erscheinenden Empfangsimpulses am Photoempfänger gesetzt wird. Das Speicherelement soll die Information, ob der Überwachungsbereich der Lichtschranke frei ist oder nicht, für die Zeit zwischen jeweils zwei Nulldurchgängen der Netzspannung abspeichern.

Der am Ausgang der Wechsellichtschranke vorgesehene Halbleiterschalter wird beispielsweise durch einen Triac verwirklicht, welcher von einer bistabilen RS-Kippstufe statisch über alle vier Quadranten angesteuert wird. Hierzu ist erfindungsgemäss vorgesehen, dass der Halbleiterausgang der Photoempfangsanordnung einen Triac aufweist, welcher mit seiner H1-Elektrode an Masse liegt und dessen Zündelektrode durch antivalent von der bistabilen Kippstufe gesteuerte Schalter abwechselnd an Masse und eine Zündspannung angelegt ist.

Diese Ausbildung hat den Vorteil, dass selbst ohne Phasenkompensation Lasten mit beliebigem Blindanteil geschaltet werden können. Es ist gewährleistet, dass selbst bei kurzfristiger Unterschreitung des Triac-Haltestroms der Triac sofort wieder eingeschaltet wird.

Die bistabile Kippstufe wird vorteilhafterweise mit zwei überzähligen Analogschaltern eines IC-Bausteins realisiert.

Die Ansteuerung des Triacs erfolgt zweckmässig über zwei CMOS-Analogschalter. Hierzu wird ein Schalter längs in die Ansteuerleitung geschaltet. Der zweite Schalter schaltet die Triac-Zündelektrode nach 0 V bzw. nach Masse. Die Schalter werden von FF-Ausgängen antivalent angesteuert.

Aufgrund dieser Ausbildung ist eine optimale Ausnutzung der Ansteuerleistung gewährleistet, da keine Energie in einem Ableitwiderstand verbraucht wird. Im gesperrten Zustand wird die Zündelektrode des Triacs niederohmig nach Masse gelegt, wodurch eine erhöhte Sicherheit gegen unbeabsichtigtes Zünden z.B. durch Fremdeinwirkung erreicht wird.

Der Betrieb des CMOS-Analogschalters erfolgt mit einer symmetrischen Speisespannung. Hierdurch arbeiten die Schalter bidirektional, wodurch der Triac über alle vier Quadranten angesteuert werden kann.

Die Erfindung wird im folgenden beispielsweise anhand der Zeichnung beschrieben; in dieser zeigt:

Fig. 1 ein schematisches Schaltbild einer erfindungsgemässen Wechsellichtschranke,

Fig. 2 den Schaltzustand des CMOS-Schalters bei hindernisfreiem Überwachungsbereich,

Fig. 3 den Schaltzustand des CMOS-Schalters bei durch ein Hindernis unterbrochenem Überwachungsbereich der Lichtschranke,

Fig. 4 eine schematische Darstellung der bei der Schaltung nach Fig. 1 verwendeten bistabilen Kippstufe,

Fig. 5 ein schematisches Schaltbild der Triac-Ansteuerung,

Fig. 6 eine schematische Darstellung der Stromversorgung bei der Schaltungsanordnung nach Fig. 1 und

Fig. 7 ein Impulsdiagramm an verschiedenen Bauelementen der erfindungsgemässen Wechsellichtschranke.

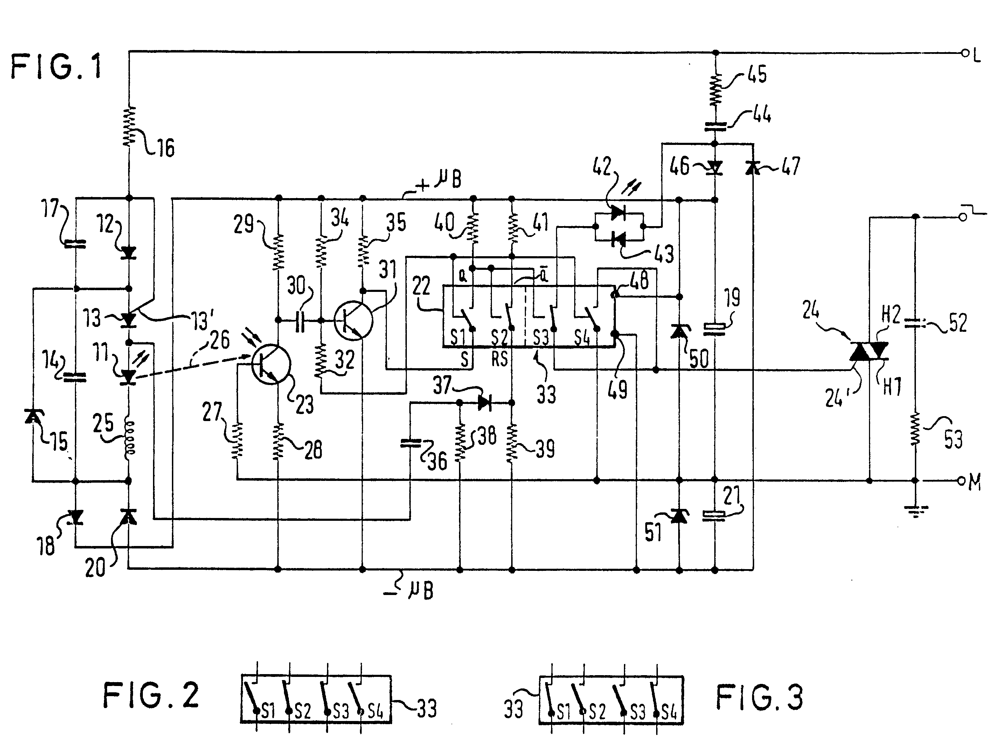

Nach Fig. 1 ist die erfindungsgemässe Wechsellichtschranke über die Klemmen L und M an eine Netzwechselspannung von beispielsweise 220 V und 50 Hz angelegt. Die Netzspannungsklemme M liegt gleichzeitig an Masse.

Die Netzspannungsklemme L ist über einen Ohm'schen Widerstand 16 an eine Diode 12 angelegt, zu der parallel ein Kondensator 17 geschaltet ist. In Reihe mit der Diode 12 liegt ein PUT 13, dem eine Photodiode 11 und eine Induktivität 25 folgt.

Parallel zu der Reihenschaltung des PUT der Photodiode 11 und der Induktivität 25 sind ein Speicherkondensator 14 und eine Zenerdiode 15 geschaltet. Der Verbindungspunkt der Zenerdiode 15 des Kondensators 14 und der Induktivität 25 sind an zwei antiparallel geschaltete weitere Dioden 18, 20 angelegt, von denen die erste über einen Glättungskondensator 19 und die zweite über einen Glättungskondensator 21 an Masse gelegt ist.

Die bisher hier beschriebene Schaltungsanordnung bildet insgesamt eine Impulslichtquelle, wobei gleichzeitig die Bildung einer positiven und einer negativen Betriebsspannung für die noch zu beschreibende Empfänger-Schaltanordnung gewährleistet wird.

Die Photoempfangsanordnung besteht aus einem Phototransistor 23, welcher über einen gestrichelt angedeuteten Überwachungsbereich 26 die Lichtblitze von der Photodiode 11 empfängt, sofern kein Hindernis im Überwachungsbereich 26 angeordnet ist.

Die Basis des Phototransistors 23 ist über einen Ohm'schen Widerstand 27 geerdet, während der Emitter über einen Ohm'schen Widerstand 28 am Glättungskondensator 21 und damit an der negativen Betriebsspannung liegt. Der Kollektor des Phototransistors 23 ist über einen Widerstand 29 an dem Glättungskondensator 19 und damit an die positive Betriebsspannung angelegt.

Weiter ist der Kollektor des Phototransistors 23 über einen Koppelkondensator 30 an die Basis eines Verstärkertransistors 31 angelegt, dessen Basis über einen Ohm'schen Widerstand 32 an einen Schalteranschluss von S2 und an den Kontrolleingang von S1 des CMOS-Schalters 33 anliegt. Weiter ist die Basis des Transistors 31 über einen Widerstand 34 mit der positiven Betriebsspannung verbunden. Die positive Betriebsspannung liegt über einen Widerstand 35 auch am Kollektor des Transistors 31 an. Der Kollektor ist weiter mit einem Schalteranschluss des Schalters S1 innerhalb des CMOS-Schalters 33 verbunden.

Von dem Verbindungspunkt zwischen dem PUT 13 und der Photodiode 11 verläuft eine Leitung über einen Koppelkondensator 36 und eine Diode 37 zu einem Schalteranschluss des zweiten Schalters S2 des CMOS-Schalters 33. Die beiden Elektroden der Diode 37 sind durch Widerstände 38, 39 an die negative Betriebsspannung bzw. den Glättungskondensator 21 angelegt.

Widerstände 40, 41 verbinden die positive Betriebsspannung mit zwei Schalteranschlüssen der Schalter S1, S2 des CMOS-Schalters 33; der Widerstand 40 ist ausserdem mit den Kontrolleingängen der Schalter S2, S3 verbunden.

Der eine Schalteranschluss des Schalters S3 ist über eine Anzeigediode 42 und eine antiparallel dazu geschaltete Gleichrichterdiode 43, einen Kondensator 44 und einen Widerstand 45 unmittelbar an die Netzspannungsklemme L angelegt. Der Verbindungspunkt zwischen dem Kondensator 44 und der Anzeigediode 42 ist über in entgegengesetzter Richtung geschaltete Dioden 46 bzw. 47 an den Glättungskondensator 19 bzw. den Glättungskondensator 21 angeschlossen.

Die Stromversorgungsklemmen 48, 49 des CMOS-Schalters 33 sind an die positive bzw. negative Betriebsspannung angeschlossen. Die positive und die negative Betriebsspannung sind durch Zenerdioden 50 bzw. 51 stabilisiert.

Der Halbleiterausgang der Schaltungsanordnung nach Fig. 1 ist durch einen Triac 24 gebildet, dessen H1-Elektrode an Masse liegt und die eine Anschlussklemme der Schaltung bildet. Die H2-Elektrode bildet die andere Ausgangsklemme der Schaltung. Über die beiden Triacelektroden H1, H2 ist noch ein aus einem Kondensator 32 und einem Widerstand 53 gebildetes RC-Glied geschaltet. Die zu schaltende Last wird zwischen der Ausgangsklemme (H2 des Triacs) und L angeschlossen.

Die Zündelektrode 24' des Triacs 24 ist an den einen Schalteranschluss des Schalters S4 und den Schalteranschluss des Schalters S3 des CMOS-Schalters 33 angeschlossen.

Die Arbeitsweise der beschriebenen Schaltungsanordnung ist wie folgt:

Während der positiven Halbwelle der Netzwechselspannung wird der Kondensator 14 über den Widerstand 16 und die Diode 12 aufgeladen. Sobald die Spannung am Kondensator 14 die Zenerspannung der Zenerdiode 15 erreicht hat, begrenzt die Zenerdiode 15 die Ladespannung auf einen jetzt konstant bleibenden Wert. Der Ladevorgang ist zu diesem Zeitpunkt beendet. Da die Netzwechselspannung aber noch weiter ansteigt, fliesst der Strom nun über die Zenerdiode 15 sowie über die Gleichrichterdiode 18 zum Glättungskondensator 19, wodurch die überschüssige Energie für die Bildung der positiven Betriebsspannung der Schaltung benutzt wird.

Sobald die Netzwechselspannung ihren Scheitelpunkt überschritten hat, beginnt sie wieder abzusinken. Für den Sender bedeutet dies, dass die Spannung an der Steuerelektrode 13' des PUT 13 absinkt, wobei jedoch die Spannung am Speicherkondensator 14 und somit an der Anode des PUT 13 konstant bleibt. Der Widerstand 16 bewirkt hierbei zusammen mit dem Kondensator 17, dass die Spannung an der Steuerelektrode 13' des PUT 13 konstant bleibt. Die Zeitkonstante der durch den Widerstand 16 und den Kondensator 17 gebildeten Schaltung bewirkt somit, dass die Spannung an der Steuerelektrode 13' in bezug auf die Netzspannung verzögert absinkt. Durch geeignete Dimensionierung des Widerstands 16 und des Kondensators 17 wird diese Zeitverzögerung erfindungsgemäss nun so eingestellt, dass während des Nulldurchgangs der Netzwechselspannung an der Steuerelektrode 13' des PUT eine Spannung anliegt, die gerade den Wert der Konstanthaltung an der Zenerdiode 15 zu unterschreiten beginnt. Somit ist die Zündbedingung für den PUT 13 erfüllt. Der PUT 13 zündet nun im Nulldurchgang der Netzwechselspannung und die Ladung des Speicherkondensators 14 wird über den PUT 13, die Photodiode 11 und die Induktivität 25 kurzgeschlossen. Der dabei entstehende Stromimpuls wird in der Photodiode 11 zu einem Lichtimpuls umgesetzt. Bemerkenswert ist, dass dieser Lichtimpuls während des Nulldurchgangs der Netzspannung ausgesandt wird. Diese zeitliche Zuordnung des Sendeimpulses zur Phase der Netzwechselspannung hat für die Gesamtfunktion der erfindungsgemässen Wechsellichtschranke eine entscheidende Bedeutung.

Durch die Entladung des Speicherkondensators 14 wird der Haltestrom des PUT 13 so weit unterschritten, dass der PUT sperrt. Der Sendevorgang ist damit abgeschlossen. Während der nun folgenden negativen Halbwelle wird kein Lichtblitz ausgesendet. Die Netzspannung wird aber auch während dieser Phase genutzt, indem über den Widerstand 16, die Gate-Anodenstrecke des PUT 13, die Zenerdiode 15 und die Gleichrichterdiode 20 ein Strom zum Glättungskondensator 21 fliesst, so dass an diesem Glättungskondensator 21 die negative Betriebsspannung der Empfangsschaltung aufgebaut wird.

Der von der Photodiode 11 ausgesandte Lichtblitz wird bei freiem Lichtweg zwischen Sender und Empfänger vom Phototransistor 23 empfangen. Der Phototransistor 23 setzt den Lichtblitz in einen Stromimpuls um, der am Arbeitswiderstand 29 einen negativen Spannungssprung bewirkt. Über den Koppelkondensator 30 wird dieser Spannungssprung zur Basis des Verstärkungstransistors 31 übertragen. Der im Ruhezustand durchgesteuerte Transistor 31 wird durch diese Ansteuerung kurzfristig gesperrt, wodurch die Spannung am Kollektor des Transistors 31 einen positiven Sprung macht. Dieser Spannungssprung am Kollektor des Transistors 31 bzw. am Widerstand 35 stellt das eigentliche Empfangssignal dar. Der Empfangimpuls erscheint aufgrund von Laufzeiten der Empfangsschaltung zeitlich deutlich nach dem Sendeimpuls, was für die Funktion der Schaltungsanordnung von besonderer Bedeutung ist.

Das Empfangssignal besteht also lediglich aus Impulsen, die bei freiem Lichtweg im zeitlichen Abstand von 20 ms auftreten. Um nun zu einem stationären Ausgangssignal zu gelangen, wird ein Speicherelement in Form einer bistabilen Kippstufe nach Art eines RS-Flip-Flop verwendet.

Erfindungsgemäss stellt die bistabile Kippstufe 22 einen Bestandteil eines CMOS-Schalters 33 dar. Der CMOS-Schalter enthält vier Analogschalter von denen wie gesagt zwei zum Aufbau der bistabilen Kippstufe 22 genutzt werden.

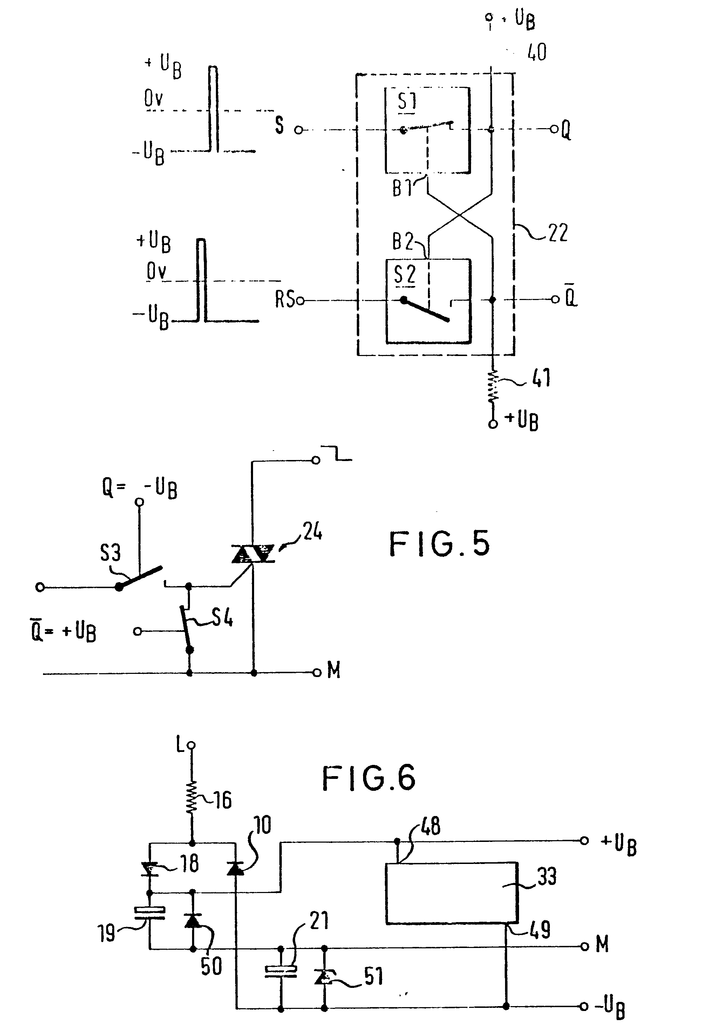

Die Funktion der bistabilen Kippstufe wird jetzt anhand der Fig. 1 und 4 erläutert.

Fig. 4 stellt die bistabile Kippstufe im rückgesetzten Zustand dar. Am Ausgang $\overline{Q}$ liegt die logische 1 am Ausgang Q die logische 0 an, da der «Pull-up»-Widerstand 40 über den Schalter S1 nach Masse geschaltet ist. Gleichzeitig wird diese logische 0 an den Bedienungseingang B2 des Schalters S2 gelegt. Hierdurch wird der Schalter S2 offengehalten, wodurch wie gesagt $\overline{Q}$ die logische 1 darstellt und gleichzeitig B1 den Schalter S1 geschlossen hält. Die bistabile Kippstufe 22 befindet sich somit in einem der beiden stabilen Zustände.

Erhält die bistabile Kippstufe nun einen positiven Spannungsimpuls am Setzeingang S, wie das in Fig. 4 links angedeutet ist, so wird dieser, da der Schalter S1 ja noch geschlossen ist, nach Q durchgeschaltet. Sobald nun der Ausgang Q logische 1 wird, wird auch der Bedienungseingang B2 des Schalters S2 logische 1. Das hat zur Folge, dass der Schalter S2 schliesst. Die bistabile Kippstufe kippt nun in ihre zweite stabile Lage. Der geschlossene Schalter S2 schaltet das Massepotential vom Rücksetzeingang RS zum Ausganng $\overline{Q}$ durch. Der Ausgang $\overline{Q}$ und somit auch der Bedienungseingang B1 des Schalters S1 werden zu logisch 0. Der Schalter S1 öffnet und der Ausgang Q hat über den Widerstand 40 eine logische 1. Die bistabile Kippstufe befindet sich wieder in einer stabilen Lage.

Während nun der Sender über die Photodiode 11 einen Lichtblitz erzeugt, entsteht an der Anode der Photodiode 11 ein positiver Spannungssprung. Dieser gelangt über den Kondensator 36 zum Arbeitswiderstand 38. Vom Arbeitswiderstand 38 wird er dann über die Diode 37 an den Rücksetzeingang RS der bistabilen Kippstufe 22 gelegt. Die bistabile Kippstufe 22 wird also bei jedem Lichtblitz vom Sender unmittelbar zurückgesetzt. Der Widerstand 39 hält den Rücksetzeingang während der Impulspausen auf seinem Bezugspotential der negativen Speisespannung.

Gesetzt wird die bistabile Kippstufe 22 durch den Empfänger. Hierzu ist der Kollektor des Transistors 31 mit dem Setzeingang des Flip-Flop zusammengeschaltet.

Ein Setzimpuls erscheint also immer dann, wenn der Empfänger den Sendeimpuls gesehen hat, d.h., wenn der Lichtweg zwischen Sender und Empfänger frei ist.

Bei freiem Lichtweg zwischen Sender und Empfänger setzt der Sender die bistabile Kippstufe 22 während des Nulldurchgangs der Netzspannung zurück. Der verzögert eintreffende Empfangsimpuls bzw. Setzimpuls setzt die Kippstufe wieder. Es bleibt über die ganze Periode der Netzspannung gesetzt. Lediglich während der Nulldurchgänge der Netzspannung wird es vom Sender kurz zurückgesetzt und vom Empfänger sofort wieder gesetzt.

Wenn der Lichtweg durch ein Hindernis unterbrochen wird, so führt der nächstfolgende Sendeimpuls zum Rücksetzen der bistabilen Kippstufe 22. Obwohl die Kippstufe nun bereits rückgesetzt ist, erhält sie dennoch bei jedem erneuten Sendeimpuls (Nulldurchgang) einen erneuten Rücksetzbefehl. Die bistabile Kippstufe bleibt damit stabil im rückgesetzten Zustand, solange kein Empfangssignal zum Empfänger gelangt.

Eine Zustandsänderung der bistabilen Kippstufe ist also grundsätzlich nur im Nulldurchgang der Netzspannung möglich. Erfolgt eine Zustandsänderung im Überwachungsbereich der Lichtschranke zwischen zwei Nulldurchgängen der Netzspannung so kann diese zunächst nicht registriert werden, sondern erst dann, wenn der nächste Nulldurchgang erfolgt.

Der Halbleiterausgang enthält als wesentlichen Bestandteil den Triac 24. Von besonderer Bedeutung für die Funktion der Wechsellichtschranke ist nun die spezielle Triac-Ansteuerung mit grösstmöglichem Wirkungsgrad.

Die Ansteuerung des Triacs erfolgt nun durch eine Wechselspannung auf das Gate 24'. Es wird also ein Wechselspannungsschalter benötigt, dessen Schaltstrom jedoch entscheidend geringer sein darf als der des Schaltausgangs. Es kommen grundsätzlich Gleichrichter in Verbindung mit Thyristoren oder dergleichen (Relais) in Frage. Dies sind Ersatzlösungsmöglichkeiten für den gesamten Schaltausgang (ohne Triac). Bevorzugt ist die im Ausführungsbeispiel gezeigte Lösung mit den Im CMOS-Schalter 33 enthaltenen weiteren Analogschaltern S3, S4. S3/4 stellen die obengenannten Wechselspannungsschalter dar. Schematisch ist die Ansteuerung des Triacs 24 auch in Fig. 5 angedeutet.

Durch die Anwendung von zwei Analogschaltern S3, S4 lässt sich der Triac 24 verlustfrei ansteuern. Beide Schalter werden antivalent Q, $\overline{Q}$ von der bereits beschriebenen bistabilen Kippstufe 22 angesteuert. Um wiederum möglichst verlustfrei arbeiten zu können, wird der Ansteuerstrom über den Kondensator 44 und den Widerstand 45 dem Netz L entnommen. Die Anzeigediode 42 liegt parallel zur Gleichrichterdiode 43 ebenfalls im Ansteuerzweig. Die Vorteile hierbei liegen darin, dass einmal der Einsatz des Kondensators 44 eine Spannungsteilung ohne allzu grosse Wirkverluste möglich macht und dass ausserdem auch der Spannungsabfall an der Anzeigediode 42 bzw. der Gleichrichterdiode 43 genutzt wird.

Da die Ansteuerung über die Dioden 46, 47 auch an die beiden Betriebsspannungen angeschlossen ist, unterstützt sie bei inaktivem Ausgang die interne Betriebsspannung.

Bei dieser Schaltungsanordnung wird auf minimale Leistungsaufnahme, d.h minimale Verlustleistung besonders geachtet. Hierzu trägt besonders die interne Spannungsversorgung bei sowie die Anwendung eines integrierten C-MOS-Bausteins und nicht zuletzt die Verwendung von Analogschaltern zur Bildung einer bistabilen Kippstufe sowie zur Ansteuerung des Triacs.

Fig. 6 veranschaulicht nochmals in vereinfachter und übersichtlicher Form die Bildung der positiven und negativen Betriebsgleichspannung für Empfangsschaltungsanordnung. Es sind in diesem vereinfachten Schaltbild lediglich die für die Bildung der Betriebsspannungen wesentlichen Bauelemente wiedergegeben.

Die Fig. 2 und 3 zeigen die Schaltzustände des CMOS-Schalters 33 bei freiem Lichtweg (Fig. 2) bzw. unterbrochenem Lichtweg (Fig. 3).

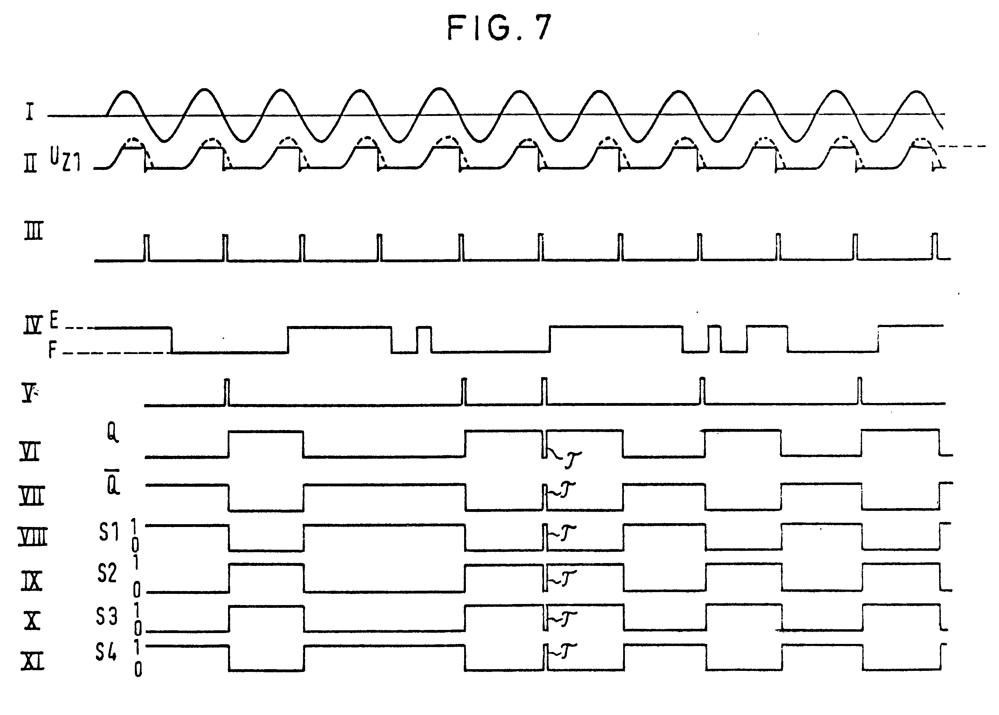

In Fig. 7 sind die Impulsdiagramme verschiedener Komponenten der Schaltungsanordnung wiedergegeben und zwar zeigen:

Das Diagramm I die Netzspannung, das Diagramm II die Ladespannungskurve des Ladekondensators 14, wobei deutlich die Erreichung eines Entladezustands nach Erreichen der Zenerspannung zu erkennen ist. Die gestrichelte Kurve zeigt die durch den Kondensator 17 und den Widerstand 16 verzögerte Spannung an der Steuerelektrode 13' des PUT 13. Unterschreitet die gestrichelte Spannung den Wert der Spannung $U_{Z1}$, so zündet der PUT 13 und es entsteht ein Lichtblitz. Die gestrichelte Spannungskurve ist auf einem Oszillographen nicht darstellbar, da sie ebenfalls von der Zenerdiode 15 über die Diode 12 begrenzt wird. Würde es zu keiner Zündung des PUT 13 kommen, so hätte sie nach Entfernen von C14 den rechts von der senkrechten Flanke gezeichneten Verlauf (Verzögerung). Hinter dem Impuls ganz rechts im Diagramm II ist die Begrenzung durch die Zenerdiode 15 sowie die Spannungsspeicherung durch C14 angedeutet. Die Spannung hat also zeitlich nach dem Zündzeitpunkt des PUT nicht den nur zur Erklärung gestrichelt eingezeichneten Verlauf, da die Spannung durch die Zenerdiode 15 begrenzt wird. Im Diagramm II ist der tatsächliche Spannungsverlauf an der Anode 13 in ausgezogenen Linien wiedergegeben.

Das Diagramm III zeigt den Strom in der Photodiode 11, deutet also das Erscheinen der Sendelichtblitze an.

Auf der Abszisse sämtlicher Diagramme ist jeweils die Zeit im gleichen Massstab aufgetragen.

Das Signal gemäss Diagramm III stellt gleichzeitig den Rücksetzimpuls für die bistabile Kippstufe 22 dar. Im Diagramm IV ist ein bestimmter Rhythmus der Unterbrechung des Überwachungsbereichs der Lichtschranke dargestellt. Das Niveau E deutet einen Eingriff an, während das Niveau F einem ununterbrochenen Lichtdurchgang durch den Überwachungsbereich 26 hindurch entspricht.

Das Diagramm V gibt das Empfangssignal am Kollektor des Transistors 31 wieder. Bedeutsam ist das Erscheinen dieses Signals jeweils ganz kurzzeitig nach dem Rücksetzen der bistabilen Kippstufe 22.

Die Diagramme VI und VII geben den Spannungsverlauf der Ausgänge Q bzw. $\overline{Q}$ der bistabilen Kippstufe 22 wieder.

Die Diagramme VIII, IV und X geben schliesslich die Schaltzustände der Schalter S1, S2, S3 bzw. S4 wieder, wobei die 1 den geschlossenen und die 0 den offenen Zustand des jeweiligen Schalter darstellt. Mit $\tau$ ist in den Diagrammen VI bis XII die Empfängerlaufzeit bezeichnet.

**Patentansprüche**

1. Direkt an ein Wechselspannungsnetz anschliessbare Wechsellichtschranke mit einer einen Photoempfänger (22) enthaltenden Photoempfangsanordnung und einer über eine erste Gleichrichterdiode (12) und einen PUT (13) an die Netzspannung angeschlossenen Sende-Photodiode (11), wobei parallel zu dem PUT und der Photodiode ein Speicherkondensator (14) geschaltet ist, der im Rhythmus der Netzspannung über die Photodiode entladen wird, wobei parallel zum Speicherkondensator (14) eine Zenerdiode (15) geschaltet ist, wobei die Steuerelektrode (13') des PUT (13) an dem an der Netzspannung liegenden Pol der ersten Gleichrichterdiode (12) liegt und die Netzspannung über einen Widerstand (16) zugeführt ist, dadurch gekennzeichnet, dass parallel zu der Gleichrichterdiode (12) ein Kondensator (17) geschaltet ist, wobei die durch den Kondensator (17) und den Widerstand (16) gebildete Schaltung eine solche Zeitkonstante hat, dass während des Nulldurchgangs der Netzwechselspannung an der Steuerelektrode (13') eine Spannung anliegt, die gerade den Wert der Konstantspannung der Zenerdiode (15) zu unterschreiten beginnt.

2. Wechsellichtschranke nach Anspruch 1, dadurch gekennzeichnet, dass zwischen Masse (M) und der Parallelschaltung von Speicherkondensator (14) und Zenerdiode (15) über eine in gleicher Richtung wie die erste Gleichrichterdiode (12) geschaltete zweite Gleichrichterdiode (18) ein erster Glättungskondensator (19) geschaltet ist.

3. Wechsellichtschranke nach Anspruch 1 oder 2, dadurch gekennzeichnet, dass zwischen Masse (M) und der Parallelschaltung von Speicherkondensator (14) und Zenerdiode (15) über eine in entgegengesetzter Richtung wie die erste Gleichrichterdiode (12) geschaltete dritte Gleichrichterdiode (20) ein zweiter Glättungskondensator (21) geschaltet ist.

4. Wechsellichtschranke nach einem der vorhergehenden Ansprüche, dadurch gekennzeichnet, dass die Photoempfangsanordnung eine bistabile Kippstufe (22) aufweist, welche beim Auslösen eines Lichtblitzes an der Photodiode (11) rückgesetzt und nach Erscheinen eines geringfügig verzögert erscheinenden Empfangsimpulses am Photoempfänger (23) gesetzt wird.

5. Wechsellichtschranke nach Anspruch 4, dadurch gekennzeichnet, dass sie als Halbleiterausgang der Photoempfangsanordnung einen Triac (24) aufweist, welcher mit seiner H1-Elektrode an Masse liegt und dessen Zündelektrode (Gate) (24') durch antivalent von der bistabilen Kippstufe (22) gesteuerte Schalter (S3, S4) abwechselnd an Masse und eine Zündspannung angelegt ist.

6. Wechsellichtschranke nach Anspruch 4 oder 5, dadurch gekennzeichnet, dass die bistabile Kippstufe (22) aus den beiden Analogschaltern (S3, S4), die in einem einheitlichen CMOS-Schalter (33) zusammengefasst sind, gebildet wird.

**Claims**

1. A pulsed light barrier directly connectable to an AC power supply, the pulsed light barrier comprising a photo receiver arrangement containing a photo receiver (22), and a transmitter photodiode (11) connected via a first rectifier diode (12) and a PUT (13) to the mains voltage, wherein a storage capacitor (14) which is discharged in the rhythm of the mains voltage via the photodiode is connected in parallel to the PUT and the photodiode, wherein a zener diode (15) is connected parallel to the storage capacitor (15), wherein the control electrode (13') of the PUT (13) is connected to the pole of the first rectifier diode (12) which lies at the mains voltage, and wherein the mains voltage is supplied via a resistor (16), characterized in that a capacitor (17) is connected parallel to the rectifier diode (12), wherein the circuit formed by the capacitor (17) and the resistor (16) has a time constant such that during the zero passage of the mains AC voltage a voltage is present at the control electrode (13') which just begins to fall short of the value of the constant voltage of the zener diode (15).

2. A pulsed light barrier in accordance with claim 1, characterized in that a first smoothing capacitor (19) is connected between earth (M) and the parallel circuit of the storage capacitor (14) and the zener diode (15) via a second rectifier diode (18) which is connected in the same direction as the first rectifier diode (12).

3. A pulsed light barrier in accordance with claim 1 or 2, characterized in that a second smoothing capacitor (21) is connected between earth (M) and the parallel circuit of the storage capacitor (14) and zener diode (15) via a third rectifier diode (20) which is connected in the opposite to the first rectifier diode (12).

4. A pulsed light barrier in accordance with one of the preceding claims, characterized in that the photo receiver arrangement has a bistable multivibrator (22) which is reset as a light pulse is triggered at the photodiode (11) and set on the appearance at the photo receiver (23) of a received pulse which appears trivially delayed.

5. A pulsed light barrier in accordance with claim 4, characterized in that it has a triac (24) as the semiconductor output of the photo receiver arrangement, with the H1 electrode of the triac being connected to earth and its trigger electrode (Gate) (24') being alternately connected to earth and to a trigger voltage by switches (S3, S4) which are controlled antivalently from the bistable multivibrator (22).

6. A pulsed light barrier in accordance with claim 4 or 5, characterized in that the bistable multivibrator (22) is formed from the two analog switches (S3, S4) which are combined into a unitary CMOS switch (33).

**Revendications**

1. Barrière lumineuse alternative raccordable directement à un réseau de tension alternative et comprenant un dispositif photorécepteur contenant un photorécepteur (22) et une photodiode d'emission (11) raccordée à la tension du réseau par l'intermédiaire d'une première diode (12) redresseuse et d'un PUT (13), un condensateur d'accumulation (14) étant alors monté en parallèle sur le PUT et la photodiode et étant déchargé par la photodiode au rythme de la tension de réseau, une diode Zener (15) étant montée en parallèle sur le condensateur d'accumulation (14), l'électrode de commande (13') du PUT (13) se trouvant sur le pôle de la première diode redresseuse (12) qui est à la tension du réseau et la tension du réseau étant appliquée par l'intermédiaire d'une résistance (16), barrière lumineuse caractérisée en ce que, en parallèle sur la diode redresseuse (12), est monté un condensateur (17), le circuit formé par le condensateur (17) et la résistance (16) ayant une constante de temps telle que, pendant le passage par zéro de la tension alternative du réseau, on applique à l'électrode de commande (13') une tension qui commence à se trouver juste en dessous de la valeur de la tension constante de la diode Zener (15).

2. Barrière lumineuse alternative selon la revendication 1, caractérisée en ce que, entre la masse (M) et le circuit parallèle du condensateur-accumulateur (14) et de la diode Zener (15) on monte un premier condensateur de filtrage (19) par l'intermédiaire d'une deuxième diode redresseuse (18) montée dans le même sens que la première diode redresseuse (12).

3. Barrière lumineuse alternative selon la revendication 1 ou 2, caractérisée en ce que, entre la masse (M) et le circuit parallèle du condensateur-accumulateur (14) et de la diode Zener (15), on monte un deuxième condensateur de filtrage (21) par l'intermédiaire d'une troisième diode redresseuse (20) montée dans le sens inverse de la première diode redresseuse (12).

4. Barrière lumineuse alternative selon l'une des revendications précédentes, caractérisée en ce que le dispositif photorécepteur présente un étage basculeur bistable (22) qui est remis à l'état initial lors du déclenchement d'un éclair lumineux sur la photodiode (11) et qui est enclenché après apparition d'une impulsion de réception légèrement retardée sur le photorécepteur (23).

5. Barrière lumineuse alternative selon la revendication 4, caractérisée en ce qu'elle présente, en tant que sortie de semi-conducteur du dispositif photorécepteur, un triac (24) qui se trouve à la masse avec son électrode H1 et dont l'électrode d'allumage (porte) (24') est placée par un commutateur (S3, S4) commandé de façon antivalente par l'étage basculeur bistable (22), alternativement à la masse et à une tension d'allumage.

6. Barrière lumineuse alternative selon la revendication 4 ou la revendication 5, caractérisée en ce que l'étage basculant bistable (22) est·formée par les deux commutateurs analogiques (S3, S4) qui sont réunis en un commutateur CMOS unitaire (33).

FIG.1

FIG.2

FIG.3

FIG.5

FIG.6

# FIG. 7